Europäisches Patentamt

European Patent Office

Office européen des brevets

(11) Publication number: **0 537 350 A1**

# EUROPEAN PATENT APPLICATION
## published in accordance with Art. 158(3) EPC

(21) Application number: **91911298.7**

(22) Date of filing: **24.06.91**

(86) International application number:
**PCT/JP91/00850**

(87) International publication number:
**WO 92/00562 (09.01.92 92/02)**

(51) Int. Cl.5: **G06F 9/44**, G05B 13/02

(30) Priority: **29.06.90 JP 170295/90**

(43) Date of publication of application:
**21.04.93 Bulletin 93/16**

(84) Designated Contracting States:
**DE FR GB IT**

(71) Applicant: **OMRON CORPORATION**
**10, Tsuchido-cho Hanazono Ukyo-ku**
**Kyoto 616(JP)**

(72) Inventor: **HAYASHI, Motoji**
**Omron Corporation, 10, Tsuchido-cho,**
**Hanazono**
**Ukyo-ku, Kyoto-shi, Kyoto 616(JP)**
Inventor: **FUFII, Tohru**
**Omron Corporation, 10, Tsuchido-cho,**
**Hanazono**
**Ukyo-ku, Kyoto-shi, Kyoto 616(JP)**

(74) Representative: **Wilhelms, Rolf E., Dr. et al**
**WILHELMS, KILIAN & PARTNER**
**Patentanwälte Eduard-Schmid-Strasse 2**
**W-8000 München 90 (DE)**

(54) APPROXIMATE INFERENCE SYSTEM, INPUT DEVICE FOR APPROXIMATE INFERENCE AND DEVICE FOR CREATING MEMBERSHIP FUNCTION.

(57) In a device (33) for creating a membership function, a data expressing the membership function corresponding to a linguistic value is created beforehand by processing statistically the quantitative meanings of the linguistic values given by plural experts. A device (14) for inputting a linguistic value reads out the data expressing the membership function corresponding to the linguistic value from a device (34) for storing membership functions when the linguistic value is inputted, and inputs the data into an approximate inference system. Thereby, approximate inference by the input of linguistic value becomes possible. Also, the data expressing the membership function is created by sampling an input signal at plural points of time during a predetermined time interval using a device (32) for extracting data in a time interval, and by processing this sampled data statistically using the creating device (33). This data expressing the membership function is inputted to the approximate inference system through the inputting device (14) similarly. Thereby, even if the signal changes with time, it can be taken into the system as the input for the approximate inference.

Rank Xerox (UK) Business Services
(3.10/3.5x/3.0.1)

*Fig. 1*

## Technical Field

This invention relates to an approximate reasoning apparatus capable of inputting a language value, an approximate reasoning apparatus capable of inputting fluctuating input data (inclusive of an input signal), and an input unit for inputting the language (linguistic) value and the fluctuating input data to the approximate reasoning apparatus.

The language value mentioned here refers to a set of values expressed by sensuous language which stipulates an ambiguous quantitative range such as large, very large, small, heavy, light, very light, etc.

## Background Art

Approximate reasoning in a method of correcting or altering the results of reasoning depending upon information quantities of factors used in order to derive the results of reasoning is known. (For example, see "AN EXPERT SYSTEM WITH THINKING IN IMAGES", by Zhang Hongmin, Preprints of Second IFSA Congress, Tokyo, July 20 - 25, 1987, p. 765.)

This approximate reasoning method involves using a membership function given for every conclusion relative to a factor to calculate the information quantity of every factor (i.e., the information identifying capability of a factor), and correcting or altering the results of reasoning (namely the possibility that a conclusion will hold) depending upon information quantities of factors used in order to draw the conclusion (wherein the correction or alteration involves taking the product of possibility and information quantity), thereby improving the capability to identify the results of reasoning.

The conventional approximate reasoning apparatus of this kind is capable of accepting only a well-defined value (referred to as a definite value), which is expressed by one numeral, as an input. A language value, which is sensuous data such as "heavy" or "light", cannot be inputted. In addition, when input data (an input signal) is oscillating or fluctuating over a certain width (range), data must be extracted at a certain single point and applied to the approximate reasoning apparatus as input data. Since the extracted data does not necessarily represent the oscillating or fluctuating input data, there is a decline in the reliability of the results of reasoning.

An object of the present invention is to provide an approximate reasoning apparatus to which language values are capable of being inputted.

Another object of the present invention is to provide an approximate reasoning apparatus to which input data oscillating or fluctuating over a certain range is capable of being inputted as a value having an oscillating or fluctuating range without extracting a representative value from the input data.

A further object of the present invention is to provide an input unit for inputting language values or data having a range to an approximate reasoning apparatus.

## Disclosure of the Invention

An approximate reasoning apparatus according to the present invention is characterized by comprising means for creating and storing data, which represents a membership function corresponding to each of a plurality of language values relating to factors, by statistically processing data, which is given by a plurality of experts, indicating ranges signified by respective ones of a plurality of language values, means for reading data representing a membership function corresponding to a language value out of the storing means and applying it to approximate reasoning means when the language value has been inputted, and approximate reasoning means for inferring the possibility of a conclusion by applying the data, which represents the membership function corresponding to a given language value, to preset expert knowledge representing the relationship between a factor and the conclusion.

An input apparatus for an approximate reasoning apparatus according to the present invention is characterized by comprising means for creating and storing data, which represents a membership function corresponding to each of a plurality of language values relating to factors, by statistically processing data, which is given by a plurality of experts, indicating ranges signified by respective ones of a plurality of language values, and means for reading data representing a membership function corresponding to a language value out of the storing means and outputting it when the language value has been inputted.

In accordance with the present invention, language values representing sensuous data such as "large", "small", "heavy" and "light" can be inputted, and approximate reasoning which uses these inputted language values is possible. Though the quantitative ranges meant by language values differ depending upon the expert, the present invention is such that data given by a plurality of experts is statistically processed in relation to language values, whereby membership functions representing the language values are created. As a result, more appropriate ranges signified by language values can be determined and highly reliable approximate reasoning becomes possible.

An approximate reasoning apparatus according to the present invention is characterized by comprising means for creating data relating to membership functions representing input data by sampling input data at a plurality of points in a predetermined sampling period and statistically processing the data obtained by sampling, and approximate reasoning means for accepting the data relating to the membership functions and inferring a conclusion in accordance with preset expert knowledge representing the relationship between a factor and a conclusion.

An input apparatus for approximate reasoning according to the present invention is characterized by comprising means for sampling input data, which includes an input signal, over a predetermined interval, and means for creating data representing membership functions corresponding to the input data by statistically processing the data obtained by sampling.

A membership-function generating apparatus according to the present invention is characterized by comprising means for sampling input data at a plurality of points over a predetermined sampling interval, and means for creating data relating to membership functions representing the input data by statistically processing the data obtained by sampling.

In accordance with the present invention, even if the input data is oscillating or fluctuating, the input data is sampled over a predetermined interval, after which the sampling data is statistically processed, membership functions are created representing the input data and the membership functions are used in approximate reasoning. As a result, the form of the oscillating or fluctuating data can be taken as it is and supplied for approximate reasoning, and an error produced by extracting only one representative point can be minimized to make possible highly reliable approximate reasoning.

## Brief Description of the Drawings

Fig. 1 is a block diagram illustrating an example of the overall construction of an approximate reasoning apparatus;

Fig. 2 is a graph depicting a Gaussian distribution;

Figs. 3a through 3c are graphs showing the manner in which a membership function is formed;

Figs. 4a and 4b are graphs illustrating membership functions obtained for each factor;

Fig. 5 is a graph illustrating membership functions of language values;

Fig. 6 is a waveform diagram illustrating an example of an input signal;

Fig. 7 is a graph showing processing for extracting input data;

Fig. 8 is a graph illustrating a membership function of input data; and

Figs. 9a and 9b are graphs illustrating the manner in which degree of membership is obtained.

## Best Mode for Carrying Out the Embodiment

### (1) Overall construction of the approximate reasoning apparatus

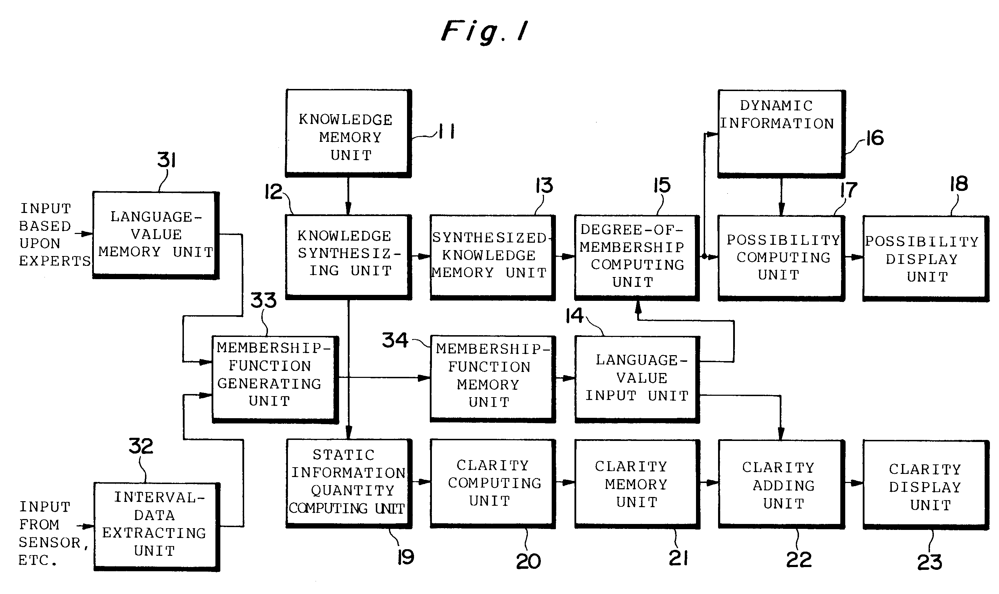

Fig. 1 illustrates an example of the overall construction of an approximate reasoning apparatus. The approximate reasoning apparatus comprises a knowledge memory unit 11, a knowledge synthesizing unit 12, a synthesized-knowledge memory unit 13, a language-value input unit 14, a degree-of-membership computing unit 15, a dynamic information quantity computing unit 16, a possibility computing unit 17, a possibility display unit 18, a static information quantity computing unit 19, a clarity computing unit 20, a clarity memory unit 21, a clarity adding unit 22, a clarity display unit 23, a language-value memory unit 31, an interval-data extracting unit 32, a membership-function creating unit 33, and a membership-function memory unit 34.

These units will now be described in detail.

### (2) Knowledge memory unit

The knowledge memory unit 11 stores knowledge, which has been inputted by an expert or the like, in a form which indicates the relationship between factors and a conclusion. This unit is capable of storing the knowledge of a plurality of experts.

Examples of the knowledge of two experts $ex_1$, $ex_2$ stored in the knowledge memory unit 11 are illustrated below in the form of rules.

Expert $ex_1$:

If $20 \leq f_1 \leq 60$, $0 \leq f_2 \leq 40$, then $c_1$     (1)

If $40 \leq f_1 \leq 80$, $60 \leq f_2 \leq 100$, then $c_2$     (2)

Expert $ex_2$:

If $30 \leq f_1 \leq 50$, $10 \leq f_2 \leq 30$, then $c_1$     (3)

If $50 \leq f_1 \leq 70$, $70 \leq f_2 \leq 90$, then $c_2$     (4)

Here $f_1$ and $f_2$ are factors, which shall be referred to as factor 1 and factor 2, respectively, hereinafter. Further, $c_1$ and $c_2$ are conclusions, which shall be referred to as conclusion 1 and conclusion 2, respectively.

Further, a, b expressed such that $a \leq f1 \leq b$ holds shall be referred to as minimum and maximum values, respectively, hereinafter.

The foregoing rules become as follows for each expert when expressed in the form of a table:

EXPERT $ex_1$

| CONCLUSION / FACTOR | $c_1$ | | $c_2$ | |
|---|---|---|---|---|
| | MINIMUM VALUE | MAXIMUM VALUE | MINIMUM VALUE | MAXIMUM VALUE |
| f1 | 20 | 60 | 40 | 80 |
| f2 | 0 | 40 | 60 | 100 |

TABLE 1

EXPERT $ex_2$

| CONCLUSION / FACTOR | $c_1$ | | $c_2$ | |
|---|---|---|---|---|
| | MINIMUM VALUE | MAXIMUM VALUE | MINIMUM VALUE | MAXIMUM VALUE |
| f1 | 30 | 50 | 50 | 70 |
| f2 | 10 | 30 | 70 | 90 |

TABLE 2

(3) Knowledge synthesizing unit

The knowledge synthesizing unit 12 combines the knowledge of the plurality of experts, which has been stored in the knowledge memory unit 11, into a single body of knowledge.

Though there are various methods of synthesizing knowledge, here the average value and standard deviation of a plurality of experts are calculated with regard to the maximum and minimum values of each factor participating in each conclusion.

Knowledge synthesizing processing will now be described taking as an example knowledge which draws the conclusion $c_1$ from the factor $f_1$ of the two experts mentioned above.

When rules for obtaining conclusion 1 ($c_1$) from factor 1 ($c_1$) are extracted from the above-mentioned rules [Eq. (1) and Eq. (3)], they are expressed as follows:

Expert $ex_1$: if $20 \leq f_1 \leq 60$ then $c_1$     (5)

Expert $ex_2$: if $30 \leq f_1 \leq 50$ then $c_1$     (6)

The average value $m_{min}$ of the minimum values and the average value $m_{max}$ of the maximum values are calculated.

$$m_{min} = \frac{20+30}{2} = 25 \qquad \ldots (7)$$

$$m_{max} = \frac{60+50}{2} = 55 \qquad \ldots (8)$$

The standard deviation $\sigma_{min}$ of the minimum values and the standard deviation $\sigma_{max}$ of the maximum values are calculated.

$$\sigma_{min} = (\frac{20^2+30^2}{2} - m_{min}^2)^{1/2} = 5 \qquad \ldots (9)$$

$$\sigma_{max} = (\frac{60^2+50^2}{2} - m_{max}^2)^{1/2} = 5 \qquad \ldots (10)$$

When such processing for combining the knowledge of the experts is carried out for all minimum and maximum values of each factor participating in each conclusion with regard to the above-mentioned rules [Eqs. (1) through (4)], the following table is obtained:

| CONCLUSION / FACTOR | $c_1$ | | | | $c_2$ | | | |
|---|---|---|---|---|---|---|---|---|
| | MINIMUM VALUE | | MAXIMUM VALUE | | MINIMUM VALUE | | MAXIMUM VALUE | |
| | AV. VALUE | STAND. DEV. | AV. VALUE | STAND. DEV. | AV. VALUE | STAND. DEV. | AV. VALUE | STAND. DEV. |
| f1 | 25 | 5 | 55 | 5 | 45 | 5 | 75 | 5 |
| f2 | 5 | 5 | 35 | 5 | 65 | 5 | 95 | 5 |

TABLE 3

Generally, in approximate reasoning, a membership function is given for factor. As one example, a method will be described in which a membership function is obtained by a Gaussian distribution using the knowledge of experts combined as set forth above.

A membership function is expressed by the following equation using the average value $m_{min}$ of minimum values, the average value $m_{max}$ of maximum values, the standard deviation $\sigma_{min}$ of minimum values and the standard deviation $\sigma_{max}$ of maximum values:

$$\Phi(x) = \text{Gauss}\,(\frac{x-x_{min}}{\sigma_{min}}) - \text{Gauss}\,(\frac{x-x_{max}}{\sigma_{max}}) \quad \ldots (11)$$

where

$x$          : value of data inputted to factor

$\Phi(x)$          : degree to which input data x belongs to factor (degree of membership)

Gauss (x)     : value of Gaussian distribution in input x

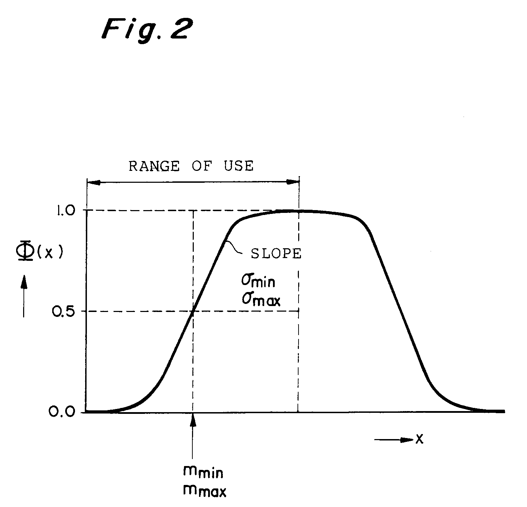

Fig. 2 illustrates an example of a Gaussian distribution. In this Gaussian distribution, only the left half is used in order to form the membership function. The position of x in $\Phi(x) = 0.5$ is decided by $m_{min}$ or $m_{max}$, and the slope is decided by $\sigma_{min}$ or $\sigma_{max}$.

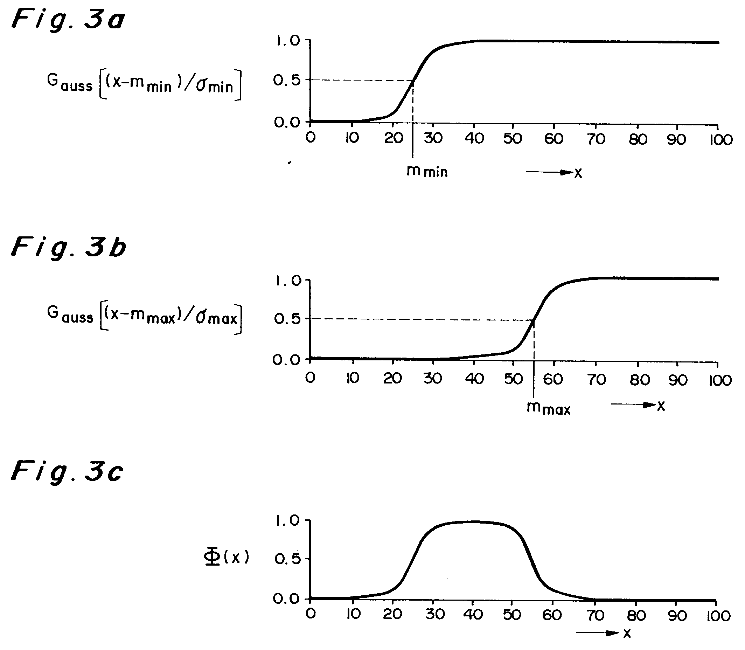

As one example, a membership function for obtaining the conclusion $c_1$ from factor $f_1$ is formed as in the manner of Fig. 3c from Fig. 3a using a value calculated from Eqs. (7) to (10). In this case, Eq. (11)

becomes as follows:

$$\Phi(x) = \text{Gauss } (\frac{x-25}{5}) - \text{Gauss } (\frac{x-55}{5}) \quad \ldots \quad (12)$$

Fig. 3a represents the first term on the right side of Eq. (11) or (12), Fig. 3b represents the second term on the right side of Eq. (11) or (12), and Fig. 3c represents the result of subtracting the second term from the first term, namely a membership function expressed by Eq. (11) or (12).

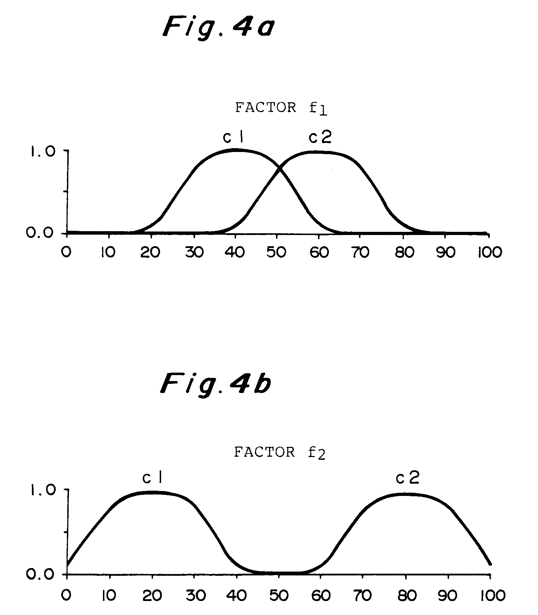

Figs. 4a and 4b illustrate examples of membership functions for obtaining the conclusions $c_1$, $c_2$ with regard to the factors $f_1$, $f_2$ formed based upon the combined knowledge shown in Table 3.

(4) Synthesized-knowledge memory unit

The synthesized-knowledge memory unit 13 stores the average values and standard deviation values, which have been calculated by the knowledge synthesizing unit 12, in the form shown in Table 3. Since the combining of knowledge is not required to be carried out whenever reasoning is performed, the results thus calculated are stored in advance. Then, by reading out the values from the memory unit 13 and using them whenever reasoning is performed, reasoning processing can be executed at high speed.

(5) Language-value memory unit

The language-value memory unit 31 is a device for storing knowledge, which relates to a plurality of language values in factors inputted by experts, in the format of a table representing the values of a range which represents each language value. The unit 31 is capable of storing knowledge relating to a plurality of language values in each of the factors of a plurality of experts. Further, since the language-value memory unit 31 has a function similar to that of the knowledge memory unit 11 described above, one unit can serve the purposes of both the units 11 and 31.

An example of the knowledge of two experts relating to language values $L_1$, $L_2$ in factor $f_1$ will be illustrated below. Examples of language values $L_1$, $L_2$ that can be mentioned are "handle is easy to turn", "handle is difficult to turn", etc.

Expert $Ex_1$: $f_1$:

$$40 \leq L_1 \leq 55 \qquad (13)$$

$$70 \leq L_2 \leq 85 \qquad (14)$$

Expert $Ex_2$: $f_1$:

$$50 \leq L_1 \leq 65 \qquad (15)$$

$$80 \leq L_2 \leq 95 \qquad (16)$$

If the knowledge of these experts relating to the language values $L_1$, $L_2$ is collected together in the form of tables, we will have the following:

EXPERT Ex$_1$

| FACTOR LANGUAGE VALUE | $f_1$ | |
|---|---|---|
| | MINIMUM VALUE | MAXIMUM VALUE |
| L1 | 40 | 55 |
| L2 | 70 | 85 |

TABLE 4

EXPERT Ex$_2$

| FACTOR LANGUAGE VALUE | $f_1$ | |
|---|---|---|
| | MINIMUM VALUE | MAXIMUM VALUE |
| L1 | 50 | 65 |
| L2 | 80 | 95 |

TABLE 5

(6) Membership-function generating unit (I)

The membership-function generating unit 33 combines the knowledge of a plurality of experts relating to the same factor and the same language value stored in the language-value memory unit 31 and creates membership functions based upon the results of the combined knowledge.

Though there are various ways to combine language-value data, here we obtain the average value and the standard deviation of a plurality of experts with regard to the minimum value and maximum value of each language value, just as in the manner of the knowledge described above.

If the knowledge of the two experts illustrated in Tables 4 and 5 is combined with regard to the each of the language values $L_1$, $L_2$, the result will be as shown in the following table:

| FACTOR LANGUAGE VALUE | $f_1$ | | | |
|---|---|---|---|---|
| | MINIMUM VALUE | | MAXIMUM VALUE | |
| | AV. VALUE | STAND. DEV. | AV. VALUE | STAND. DEV. |
| L1 | 45 | 5 | 60 | 5 |
| L2 | 75 | 5 | 90 | 5 |

TABLE 6

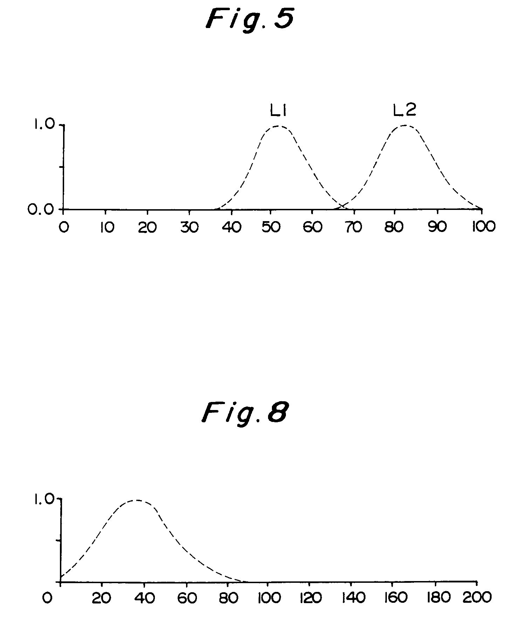

A language value is expressed as a membership function. Here membership functions of language values are created utilizing a Gaussian distribution in the same manner as the membership functions given for the above-mentioned factors. Membership functions created with regard to the language values $L_1$ and $L_2$ are illustrated in Fig. 5.

(7) Interval-data extracting unit

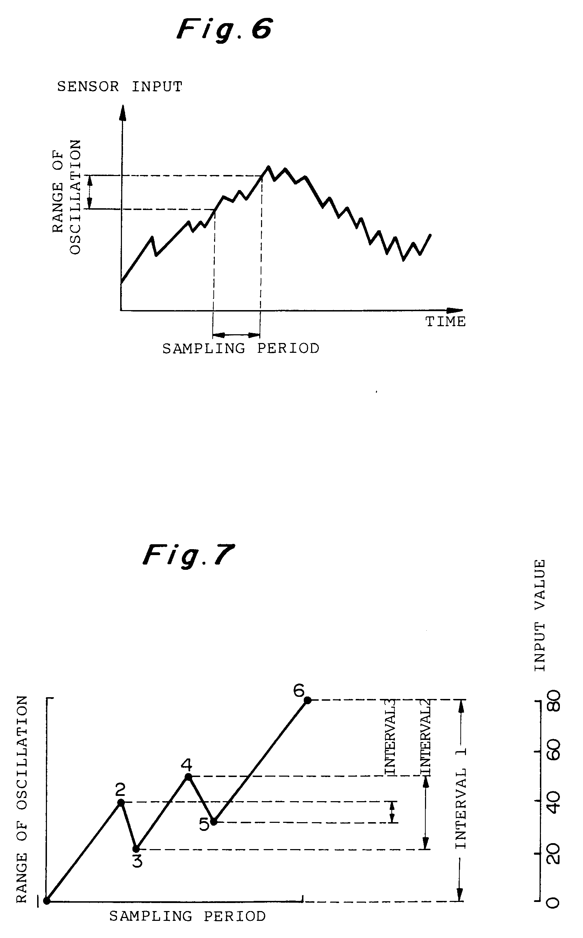

A case is considered wherein an input signal which fluctuates or oscillates with time arrives from a sensor or the like, as shown in Fig. 6. If a value of such an input signal at a certain point in time is extracted

8

as a representative value, this value will not necessarily represent the input signal correctly. Accordingly, when this value is applied to the approximate reasoning apparatus, there is the danger that an error will develop in the results of reasoning. In order to make the error small, taking the average value of the input data within a certain sampling period may be considered. However, in a case where the oscillation or fluctuation in the input signal has an offset in the sampling time period, there is the danger that the input signal will not be expressed correctly even by the average value.

The interval-data extracting unit 32 extracts base data, which is for creating membership functions that represent the input signal correctly, from the input signal. Sampling of the input signal is performed within a set sampling interval (see Fig. 6), and a graph of the sampled data (input data) is created, as shown in Fig. 7. The values (input values) of the turning points of the graph formed by the polygonal line are read. An interval is set for every turning point from the outside to the inside. Specifically, an interval 1 is set between the turning point having the largest input value and the turning point having the smallest input value, an interval 2 is set between the turning point having the second largest value and the turning point having the second smallest value, and so on. The maximum and minimum values in each interval are collected together as indicated by the following table:

|  | MINIMUM VALUE | MAXIMUM VALUE |
|---|---|---|
| INTERVAL 1 | 0 | 80 |
| INTERVAL 2 | 20 | 50 |
| INTERVAL 3 | 30 | 40 |

TABLE 7

These items of data are applied to the membership-function generating unit 33.

(8) Membership-function generating unit (II)

The membership-function generating unit 33 has a function for creating the membership functions of the above-mentioned language values and a function for creating membership functions based upon the data of the kind shown in Table 7 when this data is provided by the interval-data extracting unit 32.

When the input data of the kind shown in Table 7 is applied, the average value and standard deviation of the minimum value and maximum value in each of the plurality of intervals are calculated. The following average values and standard deviations are obtained from the input data illustrated in Table 7:

| MINIMUM VALUE | | MAXIMUM VALUE | |
|---|---|---|---|
| AVERAGE VALUE | STANDARD DEVIATION | AVERAGE VALUE | STANDARD DEVIATION |
| 16.6 | 12.4 | 56.6 | 17.0 |

TABLE 8

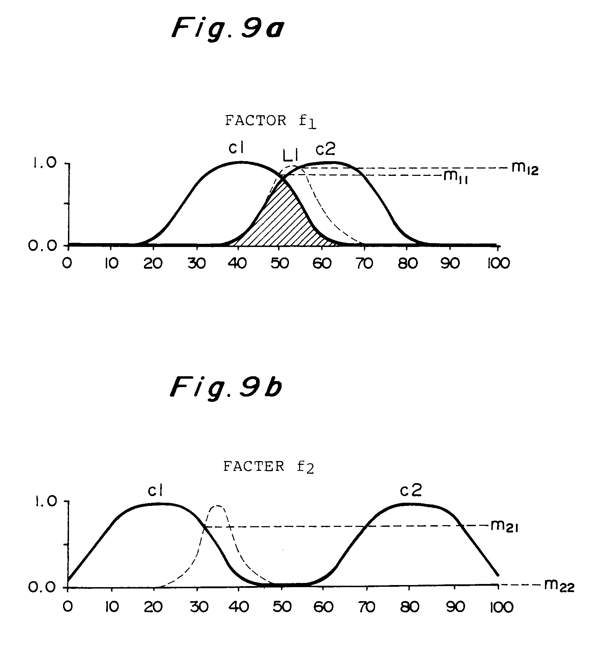

By using the average values and standard deviations thus obtained, membership functions representing the distribution of the input data in the sampling time period are created utilizing a Gaussian distribution. The method of creating membership functions is the same as that described with reference to Figs. 2 and 3. An example of a membership function created based upon Table 8 is illustrated in Fig. 8.

The above-described method is applicable not only to an input signal from a sensor but also to other data transmitted on-line. Thus, an offset in input data within a sample time period can be reflected in the shape of a membership function.

(9) Membership-function memory unit

Membership functions representing language values created by the membership-function creating unit 33 and membership functions representing input data are stored in the membership-function memory unit 34 in a form comprising the average values and standard-deviation data of the kind shown in Tables 6 and 8.

The combining of knowledge relating to language values and the creating of membership functions do not need to be carried out whenever reasoning is performed. Consequently, by thus storing already calculated results in the memory unit 34 and reading the data out of the memory unit 34 whenever reasoning is performed, reasoning processing can be raised in speed.

It goes without saying that an arrangement can be adopted in which input data such as a sensor input is used directly and immediately in approximate reasoning processing without being stored in the unit 34.

(10) Language-value input unit

The language-value input unit 14 inputs the above-described language values (e.g., "handle is easy to turn", "handle is difficult to turn", etc.). The input is made from a keyboard, communication interface, memory, file, etc. When a language value is inputted, the unit 14 reads from the memory unit 34 the data representing the membership function corresponding to this language value to apply it to the degree-of-membership computing unit 15 and provides the clarity adding unit 22 with information indicating that the language value has been inputted. Further, in a case where the input is from a sensor or the like, the unit 14 provides the degree-of-membership computing unit 15 with membership-function data representing the input signal supplied by the membership-function creating unit 33 and provides the clarity adding unit 22 with information indicating that there has been an input.

(11) Degree-of-membership computing unit

The degree-of-membership computing unit 15 calculates the degree to which the input language value or input data inputted from the language-value input unit 14 belongs to each membership function (or conclusion) in the corresponding factor. The input language value or input data is expressed in the form of a membership function, as set forth above, and therefore the degree of membership is calculated by a MIN-MAX operation between an input membership function and each membership function of the corresponding factor.

Fig. 9a illustrates the manner of calculating the degrees to which factor $f_1$ belongs to membership functions for drawing each of the conclusions $c_1$, $c_2$ when a language value $L_1$ has been applied. (The shaded portion indicates the result of a MIN operation between language value $L_1$ and $c_1$.) The degrees of membership obtained are $m_{11}$ and $m_{12}$, respectively.

Fig. 9b illustrates the manner of calculating the degrees to which factor $f_2$ belongs to membership functions for drawing each of the conclusions $c_1$, $c_2$ when a language value (a membership function indicated by the dashed line) regarding fact $f_2$ has been applied. The degrees of membership thus obtained are $m_{21}$ and $m_{22}$.

Degrees of membership are obtained in the same manner also when membership functions representing input data have been applied.

(12) Dynamic information computing unit and static information computing unit

The concept of fuzzy entropy will now be considered.

Fuzzy entropy $Ef1$ when an input $x_1$ (language values or input data in the factor $f_1$ is collectively represented by $x_1$) is applied is defined as follows:

$$Ef1 = -\frac{m_{11}}{m_{11}+m_{12}} \log \left(\frac{m_{11}}{m_{11}+m_{12}}\right) - \frac{m_{12}}{m_{11}+m_{12}} \log \left(\frac{m_{12}}{m_{11}+m_{12}}\right) \quad \dots (17)$$

Fuzzy entropy is a type of index of information identification capability. The greater the clarity with which a conclusion can be identified when the input data $x_1$ is applied, the smaller the value of fuzzy entropy. Conversely, the greater the degree of ambiguity involved in identifying a conclusion, the larger the value of fuzzy entropy becomes. In other words, the greater the difference between the degree of membership $m_{11}$ of the input data $x_1$ in the conclusion $c_1$ and the degree of membership $m_{12}$ of the input data $x_1$ in the conclusion $c_2$, the smaller the value of fuzzy entropy; the smaller the difference, the greater the value of fuzzy entropy.

Similarly, fuzzy entropy Ef2 when the input $x_2$ (language values are or input data in the factor $f_2$ is collectively represented by $x_2$) is applied is given by the following equation:

$$Ef2 = - \frac{m_{21}}{m_{21}+m_{22}} \log \left(\frac{m_{21}}{m_{21}+m_{22}}\right)$$
$$- \frac{m_{22}}{m_{21}+m_{22}} \log \left(\frac{m_{22}}{m_{21}+m_{22}}\right) \qquad \ldots (18)$$

The range of possible values of fuzzy entropy Ef is as follows:

$$0 \leq Ef \leq \log(n)$$

   n:    number of conclusions in terms of factors

In this example, the number of conclusions in terms of factor 1 ($f_1$) is two ($c_1$, $c_2$), and therefore the maximum value of fuzzy entropy Ef is log(2).

Next, a dynamic information quantity $If_{1D}(x_1)$ which prevails when the input data $x_1$ is applied is obtained using fuzzy entropy Ef1. Here the dynamic information quantity $If_{1D}(x_1)$ is the identification capability of a factor for deciding a conclusion when reasoning is performed. The greater the difference between the degree of membership $m_{11}$ of the input data $x_1$ in the conclusion $c_1$ and the degree of membership $m_{12}$ of the input data $x_1$ in the conclusion $c_2$, the larger the value of the dynamic information quantity; the smaller the difference, the smaller the value of the dynamic information quantity.

The dynamic information quantity $If_{1D}(x_1)$ regarding the factor $f_1$ is defined as the result obtained by subtracting the fuzzy entropy Ef1, which prevails when the input data $x_1$ is applied, from the maximum fuzzy entropy.

$$If_{1D}(x_1) = \log(2) + \left\{\frac{m_{11}}{m_{11}+m_{12}} \log \left(\frac{m_{11}}{m_{11}+m_{12}}\right)\right.$$
$$\left. + \frac{m_{12}}{m_{11}+m_{12}} \log \left(\frac{m_{12}}{m_{11}+m_{12}}\right)\right\} \qquad \ldots (19)$$

Similarly, the dynamic information quantity which prevails when the input data $x_2$ is applied with regard to the factor $f_2$ is as follows:

$$If_{2D}(x_2) = \log(2) + \left\{\frac{m_{21}}{m_{21}+m_{22}} \log \left(\frac{m_{21}}{m_{21}+m_{22}}\right)\right.$$
$$\left. + \frac{m_{22}}{m_{21}+m_{22}} \log \left(\frac{m_{22}}{m_{21}+m_{22}}\right)\right\} \qquad \ldots (20)$$

The dynamic information quantity computing unit 16 calculates the dynamic information quantity for every factor, in accordance with Eqs. (19) and (20), using the degrees of membership obtained by the degree-of-membership calculating unit 15.

The dynamic information quantity depends upon the input data $x_1$, $x_2$, as mentioned above. On the other hand, a static information quantity is independent of the input data. The result obtained by subtracting the average of fuzzy entropies within the range of a factor from the maximum fuzzy entropy shall be the static information quantity of the entire factor. For example, the static information quantity with regard to factor 1 is given by the following equation:

$$
\begin{aligned}
If_{1S} = \ &log(2) \\
&+ [\ \sum_{x=1}^{100} \{ \frac{m_{11}(x)}{m_{11}(x)+m_{12}(x)}\ log\ (\frac{m_{11}(x)}{m_{11}(x)+m_{12}(x)}) \\
&+ \frac{m_{12}(x)}{m_{11}(x)+m_{12}(x)}\ log\ (\frac{m_{12}(x)}{m_{11}(x)+m_{12}(x)}) \} ]/100
\end{aligned}
$$

$$\ldots (21)$$

Similarly, the static information quantity with regard to factor 2 is given by the following equation:

$$
\begin{aligned}
If_{2S} = \ &log(2) \\
&+ [\ \sum_{x=1}^{100} \{ \frac{m_{21}(x)}{m_{21}(x)+m_{22}(x)}\ log\ (\frac{m_{21}(x)}{m_{21}(x)+m_{22}(x)}) \\
&+ \frac{m_{22}(x)}{m_{21}(x)+m_{22}(x)}\ log\ (\frac{m_{22}(x)}{m_{21}(x)+m_{22}(x)}) \} ]/100
\end{aligned}
$$

$$\ldots (22)$$

where

$m_{11}(x)$ :  degree of membership of input data x in conclusion $c_1$ with regard to factor $f_1$
$m_{12}(x)$:  degree of membership of input data x in conclusion $c_2$ with regard to factor $f_1$
$m_{21}(x)$:  degree of membership of input data x in conclusion $c_1$ with regard to factor $f_2$
$m_{22}(x)$:  degree of membership of input data x in conclusion $c_2$ with regard to factor f2

$$[\ \sum_{x=1}^{100} \cdots ]/100:$$

calculation for varying x at an interval $\delta$ in the range 0 - 100 of the factor, computing fuzzy entropy for each x, and obtaining the average of these entropies (where $0 \leq \delta \leq 100$)

As will be understood from Eqs. (21) and (22), the greater the overlapping between membership functions of factors, the smaller the static information quantities of factors. Conversely, the smaller the overlapping between membership functions of factors, the greater the static information quantities of factors. In other words, the static information quantity indicates the capability of a membership function of a factor to identify a conclusion.

The static-information quantity computing unit 19 computes and stores a static information quantity for every factor, in accordance with Eqs. (21) and (22), from membership functions obtained by combined knowledge. The static information quantity is independent of input data and therefore need be computed only once.

(13) Possibility computing unit

For each and every conclusion, an information quantity of a factor is calculated such that the sum total of information quantities of factors participating in the conclusion becomes 1 and the relative strengths of the information quantities of these factors do not change. This calculated information quantity is referred to as weighting.

For example, when the above-described dynamic information quantities are used, each weighting is as follows:

Weighting of factor 1 with respect to conclusion 1:

$$wf_{11} = If_{1D}(x_1)/[If_{1D}(x_1) + If_{2D}(x_2)] \qquad (23)$$

Weighting of factor 2 with respect to conclusion 1:

$$wf_{12} = If_{2D}(x_2)/[If_{1D}(x_1) + If_{2D}(x_2)] \qquad (24)$$

Weighting of factor 1 with respect to conclusion 2:

$$wf_{21} = If_{1D}(x_1)/[If_{1D}(x_1) + If_{2D}(x_2)] \qquad (25)$$

Weighting of factor 2 with respect to conclusion 2:

$$wf_{22} = If_{2D}(x_2)/[If_{1D}(x_1) + If_{2D}(x_2)] \qquad (26)$$

Next, the products of these weightings and degrees of memberships are computed, these are totaled for every conclusion, and the result is outputted as the possibility of a conclusion.

For instance, in the above example, we have the following:

$$\text{Possibility of conclusion 1} = wf_{11} \times m_{11} + wf_{12} \times m_{21} \qquad (27)$$

$$\text{Possibility of conclusion 2} = wf_{21} \times m_{12} + wf_{22} \times m_{22} \qquad (28)$$

The possibility computing unit 17 performs the foregoing computations and calculates the possibility of every conclusion.

(14) Possibility display unit

The possibility display unit 18 displays, for every conclusion, the possibility computed by the possibility computing unit 17. The display of the possibility can be presented for all conclusions, or one or a plurality of possibilities can be displayed for a conclusion or conclusions for which the possibility is high. In addition, possibilities can be transmitted to another apparatus by communication or stored in a memory or file.

(15) Clarity computing unit

The clarity computing unit 20 computes the clarity of each factor for each and every conclusion. Here the clarity of each factor for each and every conclusion is taken to be an indication of the relative identification capability of each factor when a certain conclusion is decided. Accordingly, the identification capabilities of a plurality of factors for deciding a certain conclusion can be compared depending upon clarity so that which factor possesses a high identification capability (i.e., which factor possesses a large quantity of information) can be understood. A method of calculating clarity will now be described.

First, the relationship among conclusions, factors and static information quantities is shown in Table 9.

| CONCLUSION / FACTOR | c1 | c2 |
|---|---|---|
| $f_1$ | $If1_s$ | $If1_s$ |
| $f_2$ | $If2_s$ | $If2_s$ |
| TOTAL | $If1_s - If2_s$ | $If1_s - If2_s$ |

TABLE 9

As will be understood from Table 9, the identification capabilities of a plurality of factors for deciding each conclusion can be compared depending upon static information quantities as well. However, since relative identification capability is difficult to grasp intuitively in this form, the static information quantity is normalized for each and every conclusion, as shown in the following table, and the normalized value is

adapted as clarity $C\ell$ of each factor for each and every conclusion.

| CONCLUSION \ FACTOR | c1 | c2 |
|---|---|---|
| $f_1$ | $C\ell_{11}$ | $C\ell_{12}$ |
| $f_2$ | $C\ell_{21}$ | $C\ell_{22}$ |
| TOTAL | 1 | 1 |

TABLE 10

In Table 10, we have

$$C\ell_{11} = C\ell_{12} = If_{1S}/(If_{1S} + If_{2S})$$
$$C\ell_{21} = C\ell_{22} = If_{2S}/(If_{1S} + If_{2S})$$

Thus, in the clarity computing unit 20, the clarity of each factor is calculated for each and every conclusion.

(16) Clarity memory unit

The clarity memory unit 21 stores the clarity of each factor for every conclusion calculated by the clarity computing unit 20. The computation of clarity need not be performed each time reasoning is carried out. Accordingly, the clarity calculated is stored in the clarity memory unit 21 in advance when knowledge is combined, and a value that has been stored in the clarity memory unit 21 is read out whenever reasoning is executed. This makes it possible to achieve high-speed reasoning processing.

(17) Clarity adding unit

The clarity adding unit 22 calculates the clarity of a factor for which data has actually been inputted. Here, for the sake of reasoning actually to be carried out, the sum total of clarities of factors for which data has been inputted is calculated. The sum total of clarities indicates the clarity of the result of reasoning. It can be said that the greater the clarity, the greater the information quantity for deriving the result of reasoning. Accordingly, clarity can be used as an index for judging the reliability of the result of reasoning itself.

Clarity regarding the result of reasoning is calculated as follows:

a) In a case where data is inputted with regard to only factor 1 ($f_1$)
   ♦ clarity regarding results of reasoning of of conclusion 1 ($c_1$): $C\ell_1 = C\ell_{11}$
   ♦ clarity regarding results of reasoning of of conclusion 2 ($c_2$): $C\ell_2 = C\ell_{12}$

b) In a case where data is inputted with regard to only factor 2 ($f_2$)
   ♦ clarity regarding results of reasoning of of conclusion 1 ($c_1$): $C\ell_1 = C\ell_{21}$
   ♦ clarity regarding results of reasoning of of conclusion 2 ($c_2$): $C\ell_2 = C\ell_{22}$

c) In a case where data is inputted with regard to both factor 1 ($f_1$) and factor 2 ($f_2$)
   ♦ clarity regarding results of reasoning of of conclusion 1 ($c_1$): $C\ell_1 = C\ell_{11} + C\ell_{21} = 1.0$
   ♦ clarity regarding results of reasoning of of conclusion 2 ($c_2$): $C\ell_2 = C\ell_{12} + C\ell_{22} = 1.0$

Thus the range of possible values of clarity $C\ell$ of results of reasoning is

$$0.0 \leq C\ell \leq 1.0$$

In other words, in a case where reasoning is performed upon entering data regarding all factors capable of being used to draw a certain conclusion in a body of knowledge given for reasoning is carried out, the clarity of the conclusion will be 1.0. In a case where data is inputted with regard to only some factors among the factors capable of being used to draw a certain conclusion, clarity takes on a value between 0.0

14

and 1.0. If many factors having a high degree of clarity among the usable factors are employed in such case, the clarity of the conclusion also will be high and results of reasoning having a high reliability will be obtained.

(18) Clarity display unit

The clarity display unit 23 displays the clarity of the results of reasoning (one example of which is possibility, described above) calculated by the clarity adding unit 22. Clarity can be displayed along with the results of reasoning. Alternatively, clarity can be transmitted to another apparatus or stored in a memory or file.

The display of clarity is presented with regard to all conclusions of the results of reasoning. Accordingly, in a case where a plurality of conclusions exists, the clarity corresponding to each conclusion is displayed.

Thus, whenever data is inputted, the information quantity of a factor to which the inputted data belongs is calculated and the clarity regarding the results reasoning is displayed, thereby making it possible for the user to judge the reliability of the results of reasoning.

It goes without saying that the units 11 ~ 23 and 31 ~ 34 described above can be realized by a computer which includes a memory and a display unit. For example, the knowledge synthesizing unit 12 and the various computing units 15, 16, 17, 19, 20, 22, 32, 33 are realized ideally by a CPU which operates in accordance with a program.

Industrial Applicability

The approximate reasoning apparatus according to the present invention is useful in fields in which it is required to infer the cause of a phenomenon from the phenomenon, as in fault diagnosis of a machine. The input unit and membership-function generating unit according to the present invention are used when input data is applied in order to operate the above approximate reasoning apparatus.

**Claims**

1. An approximate reasoning apparatus comprising:
   means for creating and storing data, which represents a membership function corresponding to each of a plurality of language values relating to factors, by statistically processing data, which is given by a plurality of experts, indicating ranges signified by respective ones of the plurality of language values;
   means for reading data representing a membership function corresponding to a language value out of said storing means and applying it to approximate reasoning means when the language value has been inputted; and
   approximate reasoning means for inferring the possibility of a conclusion by applying the data, which represents the membership function corresponding to a given language value, to preset expert knowledge representing the relationship between a factor and the conclusion.

2. An input apparatus for an approximate reasoning, comprising:
   means for creating and storing data, which represents a membership function corresponding to each of a plurality of language values relating to factors, by statistically processing data, which is given by a plurality of experts, indicating ranges signified by respective ones of the plurality of language values; and
   means for reading data representing a membership function corresponding to a language value out of said storing means and outputting it when the language value has been inputted.

3. An approximate reasoning apparatus comprising:
   means for creating data relating to membership functions representing input data by sampling input data at a plurality of points in a predetermined sampling period and statistically processing the data obtained by sampling; and
   approximate reasoning means for accepting the data relating to the membership functions and inferring a conclusion in accordance with preset expert knowledge representing the relationship between a factor and a conclusion.

4. An input apparatus for approximate reasoning, comprising:

means for sampling input data, which includes an input signal, over a predetermined interval; and

means for creating data representing membership functions corresponding to the input data by statistically processing the data obtained by sampling.

5. A membership-function generating apparatus comprising:

means for sampling input data at a plurality of points over a predetermined sampling interval; and

means for creating data relating to membership functions representing the input data by statistically processing the data obtained by sampling.

6. An approximate reasoning apparatus comprising:

means for creating and storing data, which represents a membership function corresponding to each of a plurality of language values relating to factors, by statistically processing data, which is given by a plurality of experts, indicating ranges signified by respective ones of the plurality of language values;

means for creating data relating to membership functions representing input data by sampling input data at a plurality of points in a predetermined sampling period and statistically processing the data obtained by sampling;

means for reading data representing a membership function corresponding to a language value out of said storing means and applying it to approximate reasoning means when the language value has been inputted, and applying data, which relates to membership functions created by said creating means with regard to input data when the input data has been inputted, to the approximate reasoning means; and

approximate reasoning means for inferring the possibility of a conclusion by applying at least one of the data representing the membership function corresponding to a given language value and the data representing the membership function which represents the input data to preset expert knowledge representing the relationship between a factor and the conclusion.

7. The approximate reasoning apparatus according to claim 6, further comprising memory means for storing beforehand said expert knowledge representing the relationship between the factor and the conclusion.

8. The approximate reasoning apparatus according to claim 6, wherein said approximate reasoning means comprises:

degree-of-membership computing means for converting at least one of the membership function corresponding to a given language value and the membership function which represents the input data into degree of membership in a membership function represented by said knowledge;

dynamic information quantity computing means for obtaining a dynamic information quantity for every factor using this degree of membership; and

possibility computing means for obtaining the possibility of a conclusion using said degree of membership and said dynamic information quantity.

9. The approximate reasoning apparatus according to claim 6, further comprising display means for the possibility of said conclusion.

10. The approximate reasoning apparatus according to claim 6, further comprising:

memory means for storing beforehand expert knowledge representing the relationship between a factor and a conclusion; and

clarity computing means for creating information relating to clarity of a conclusion using the knowledge stored in said memory means.

11. The approximate reasoning apparatus according to claim 10, further comprising:

static information quantity computing means for computing a static information quantity of each factor;

computing means for computing the clarity of each factor for every conclusion using the computed static information quantities; and

adding means for computing the clarity for each and every conclusion by adding the clarities of factors for which language values have actually been given and data has actually been inputted, using the clarities obtained from said computing means.

12. The approximate reasoning apparatus according to claim 11, further comprising clarity display means for displaying clarity with regard to results of reasoning obtained from said clarity adding means.

## Fig. 1

KNOWLEDGE MEMORY UNIT — 11

LANGUAGE-VALUE MEMORY UNIT — 31

INPUT BASED UPON EXPERTS

KNOWLEDGE SYNTHESIZING UNIT — 12

SYNTHESIZED-KNOWLEDGE MEMORY UNIT — 13

DEGREE-OF-MEMBERSHIP COMPUTING UNIT — 15

DYNAMIC INFORMATION — 16

POSSIBILITY COMPUTING UNIT — 17

POSSIBILITY DISPLAY UNIT — 18

MEMBERSHIP-FUNCTION GENERATING UNIT — 33

MEMBERSHIP-FUNCTION MEMORY UNIT — 34

LANGUAGE-VALUE INPUT UNIT — 14

INTERVAL-DATA EXTRACTING UNIT — 32

INPUT FROM SENSOR, ETC.

STATIC INFORMATION QUANTITY COMPUTING UNIT — 19

CLARITY COMPUTING UNIT — 20

CLARITY MEMORY UNIT — 21

CLARITY ADDING UNIT — 22

CLARITY DISPLAY UNIT — 23

EP 0 537 350 A1

# Fig. 2

EP 0 537 350 A1

## Fig. 3a

$G_{auss}\left[(x-m_{min})/\sigma_{min}\right]$

## Fig. 3b

$G_{auss}\left[(x-m_{max})/\sigma_{max}\right]$

## Fig. 3c

$\Phi(x)$

## Fig. 4a

FACTOR $f_1$

## Fig. 4b

FACTOR $f_2$

## Fig. 5

## Fig. 8

## Fig.6

## Fig.7

23

## Fig. 9a

FACTOR $f_1$

## Fig. 9b

FACTER $f_2$

# INTERNATIONAL SEARCH REPORT

International Application No **PCT/JP91/00850**

## I. CLASSIFICATION OF SUBJECT MATTER (if several classification symbols apply, indicate all) 6

According to International Patent Classification (IPC) or to both National Classification and IPC

Int. Cl$^5$  G06F9/44, G05B13/02

## II. FIELDS SEARCHED

| Minimum Documentation Searched 7 | |
| --- | --- |
| Classification System | Classification Symbols |
| IPC | G06F9/44, G05B13/02 |

| Documentation Searched other than Minimum Documentation to the Extent that such Documents are Included in the Fields Searched 8 | |
| --- | --- |
| Jitsuyo Shinan Koho | 1971 - 1990 |
| Kokai Jitsuyo Shinan Koho | 1971 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
| --- | --- | --- |
| X<br>Y | Information Processing, Vol.30, No.8, Aug. 1989 (Tokyo) Osamu Ito "Fussy Controller for Process Control and its Applications" p.942-947, esp. P945-946 | 1-2, 3-12 |
| Y | JP, A, 2-151901 (Omron Corp.), June 11, 1990 (11. 06. 90), (Family: none) | 3-12 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
| --- | --- |
| September 6, 1991 (06. 09. 91) | September 24, 1991 (24. 09. 91) |
| International Searching Authority | Signature of Authorized Officer |
| Japanese Patent Office | |

Form PCT/ISA/210 (second sheet) (January 1985)